# EUROPEAN PATENT SPECIFICATION

(11) **EP 3 005 503 B1**
(45) Date of publication and mention of the grant of the patent: **28.02.2018**
(21) Application number: 14736006.9
(22) Date of filing: 06.06.2014
(51) Int. Cl.: H02G 3/04, H02G 9/06

(54) **CABLE TROUGH ASSEMBLY**
KABELKANALANORDNUNG
ENSEMBLE CHEMIN DE CÂBLES

(30) Priority: 06.06.2013 GB 201310071
(43) Date of publication of application: 13.04.2016
(73) Proprietor: Anderton Concrete Products Limited, Ibstock, Leicestershire LE67 6HS (GB)
(72) Inventor: BENTLEY, John, Ibstock Leicestershire LE67 6HS (GB)
(74) Representative: McWilliams, David John
(86) International application number: PCT/GB2014/051756
(87) International publication number: WO 2014/195727

(56) References cited:
- WO-A1-02/073762
- BE-A3- 1 018 913
- FR-A1- 2 982 713
- GB-A- 2 112 054
- US-A1- 2009 301 777

## Description

### Field of the invention

The present invention relates to a cable trough assembly for housing cables. In particular, but not exclusively, the invention relates to cable troughs of the type used to protect cables in outdoor environments, such as those used in transportation and other infrastructures.

### Background to the invention

Electrical cables form a crucial part of many types of outdoor installation, in particular of transportation infrastructures. For example, in railway infrastructures electrical cables are commonly used to convey telecommunications signals and power for railway signal systems. The cables are typically arranged alongside railway tracks on a track bed, and cable management systems are frequently employed to manage the cables.

These cable management systems perform several functions. They guide the cables alongside the track, clearly mark their position, and guard against movement of the cables on soft ground or loose ballast. Cable management systems may be used to separate and organise different types of cables. Some arrangements also shield the cables from view, improve the aesthetic of the railway line, and some offer a degree of protection against the weather and against unauthorised access to the cables. Installing the cables in a cable management system also reduces the trip hazard that could otherwise be presented by loose cables.

It will be appreciated that substantial lengths of cable are present in railway infrastructure, and hence cable management systems that can be used over long distances are required. It is therefore important that such cable management systems are inexpensive to produce and simple to install. The cable management system is usually arranged on track ballast that forms the upper layer of the track bed, and it must therefore be capable of sitting stably on the uneven surface of the track ballast without movement, and must also allow for access to the cables for maintenance.

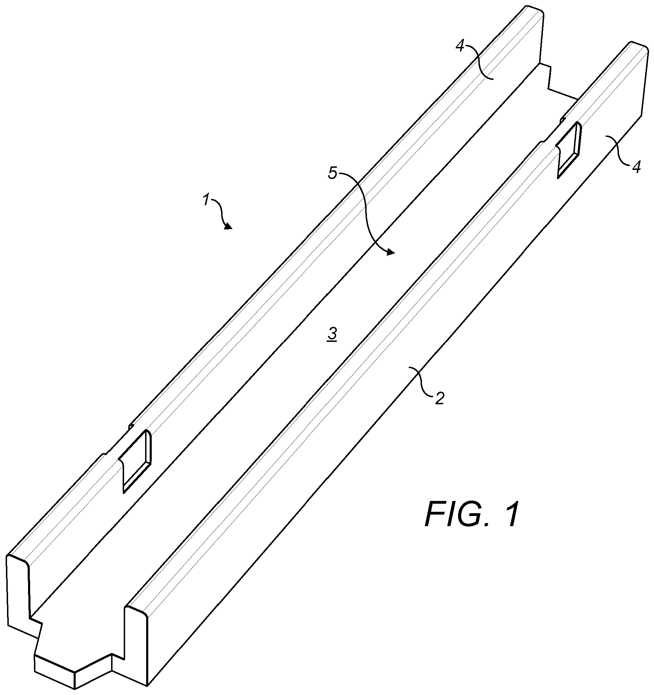

The most common cable management system is a cable trough or ducting system that is made up of a plurality of pre-cast concrete cable troughs, such as that illustrated in Figure 1.

Each cable trough 1 takes the form of an elongate open-ended pre-cast concrete unit 2 having a base 3 and a pair of upstanding side walls 4. The base 3 and walls 4 are arranged so that the unit is 'U'-shaped in cross-section and defines a channel 5 for receiving cables (not shown). The channel 5 may be closed by a removable lid (not shown). The cable troughs 1 may typically be between approximately 10 cm and 35 cm deep, between 9 cm and 30 cm wide, and approximately 50 cm to 1 m long.

In use, the cable troughs 1 are placed end-to-end alongside a railway track to form a continuous channel. The cables are laid inside the channel, and, if lids are used, the lids are placed on the cable troughs 1. The lids are removable, so as to provide easy access points to the cable.

The simple design of the cable troughs, and the use of concrete, which is a relatively low-cost material, means that the cable troughs are inexpensive to produce, durable and weather-resistant. The cable troughs can be installed quickly and easily, which is particularly advantageous in view of the large number of cable troughs that must be installed along a stretch of railway track. The weight of the cable troughs means that they sit stably on the track ballast and are relatively difficult to move once arranged in place. Cables installed in the troughs are also easily accessible for maintenance.

The simple construction and arrangement of the cable troughs described above therefore provides a cheap and effective cable management system. However, the relatively easy access to the cables is readily exploited by thieves, who steal copper cables from such cable troughs to sell them for scrap at a high price.

To steal a cable, a thief will typically use a 'cut-and-pull' method, in which a cable is cut at two locations spaced some distance apart to create a severed section of cable having two free ends, and the severed section of cable is pulled out of the cable troughs in a longitudinal direction from one of the ends. When employing this method little time is required to remove a relatively long length of cable, allowing thieves to steal the cable quickly and easily.

Cable theft is a significant and increasing problem. A report entitled "Cable theft on the railway" issued in 2012 by the UK's House of Commons transport committee estimated that, in the UK, cable theft cost Network Rail £43 million between 2009 and 2011, and lead to an estimated 3.8 million passenger journeys being delayed or cancelled in 2011 alone.

Strategies for preventing the theft of cables, which include, for example, burying cables, encasing cables in concrete, and gluing trough lids closed, have been suggested. For example, WO 02/073762 discloses the application of an obstructive element to cables that are buried directly into the ground. However, these strategies add significant complexity to the otherwise simple cable trough system, negating many of its benefits, and such strategies are prohibitively costly and cumbersome to implement. Furthermore, these strategies would hinder access to the cables for legitimate purposes such as maintenance. FR2982713 describes a lidded cable trough with means inside means for locking the cable.

Against this background, it would be desirable to provide a low-cost, easily-installed cable trough that hinders theft of cables by the cut-and-pull method.

### Summary of the invention

From a first aspect, the invention resides in a lidded cable trough assembly for housing a cable comprising: a cable trough comprising a channel for receiving the cable; a cable anchor for anchoring the cable to the cable trough; and, a trough lid for closing the channel and concealing the cable anchor. The cable anchor comprises a stop disposed outside the channel such that the stop is concealed by the cable trough when in use. The stop is arranged to abut an outer surface of the cable trough to guard against the cable anchor being pulled out of the cable trough.

The invention provides a cable trough assembly in which a cable can be effectively secured by anchoring the cable to the cable trough using the cable anchor. The stop provides an inexpensive and simple way of guarding against the cable anchor being pulled out of the cable trough. If a would-be thief were to attempt to remove the cable from the cable trough assembly by pulling the cable longitudinally, movement of the cable would be limited by the cable anchor, preventing the cable from being drawn out of the toughs. Furthermore, an additional step of removing the lids of the cable troughs is necessary to remove the cable. Thus, theft of the cable is hindered.

The beneficial effects of the invention can be magnified when a plurality of such cable trough assemblies are arranged in a cable trough system comprising a plurality of cable anchors. It is not necessary that every cable trough be provided with a cable anchor to exploit the invention, although this may be the case if desired.

The stop being arranged to abut an outer surface of the trough provides a simple mechanism by which the stop can guard against removal of the cable anchor from the cable trough.

Preferably, the cable trough comprises an aperture for receiving the cable. The aperture allows the cable anchor to be securely installed in the cable trough.

The stop may be disposed on a bottom surface of the cable trough. Hiding the stop in this way means that the stop is not visible unless the cable trough is moved, and so the presence and location of the stop is not obvious to an onlooker.

For ease of attachment to the cable, the cable anchor preferably comprises an attachment part that extends from the stop.

The attachment part and the stop may be generally orthogonal. In this way a shoulder is provided between the stop at the attachment part that can guard against the cable anchor being pulled out of the cable trough.

To ease attachment of the cable to the cable anchor still further, the attachment part may extend into the channel.

The stop may comprise a plate. In this case, the attachment part may comprise a fin that extends orthogonally from the plate. Alternatively, the attachment part may comprise a rod that extends orthogonally from the plate. Preferably, the rod is threaded so as to grip an attachment means that is used to attach the cable to the rod.

In alternative embodiments, the attachment part comprises a wire loop that extends orthogonally from the stop.

To facilitate attachment of the cable to the cable anchor, the attachment part preferably comprises attachment features. The attachment features may be openings, recesses or notches in or on the attachment part. The attachment features also guard against an attachment means that is used to attach the cable to the attachment part being pulled upwardly over the attachment part.

The attachment part and the stop may be integrally formed. In this way, the cable anchor may be easily manufactured from a single piece.

In preferred embodiments, the cable trough comprises an aperture arranged to admit the attachment part to the channel. Admitting the attachment part to the channel further facilitates attachment of the cable, while allowing the stop to remain outside the channel.

To prevent the stop from passing through the aperture, at least one dimension of the aperture may be smaller than a corresponding dimension of the stop. Preferably, the aperture extends through a base of the cable trough. In this way, the stop may be hidden beneath the base.

In preferred embodiments, the aperture is a cast aperture. Alternatively, the aperture may be machined or drilled.

In preferred embodiments, the cable trough is pre-cast or pre-moulded. In this way, the cable trough can be cast or moulded off site and can be quickly and easily installed on site.

In particularly preferred embodiments, the cable trough is made from a cementitious material. In such embodiments, the cable trough is relatively heavy, such that it cannot easily be moved or upturned by trespassers, or by passing trains. Additionally, the cementitious cable trough is relatively inexpensive and weather resistant, resulting in relatively long service life.

The invention also extends to a cable trough system comprising a plurality of cable trough assemblies arranged in end-to-end abutment, at least one of the plurality being a cable trough assembly as described above.

The invention extends further to a cable trough comprising an aperture for use in the cable trough assembly described above, and still further to a cable anchor for use in the cable trough assembly described above.

The invention also extends to a kit of parts for a cable trough assembly comprising a cable trough having an aperture and a cable anchor.

From another aspect, the invention resides in a cable trough assembly for housing a cable comprising a pre-cast cable trough and a cable anchor for anchoring the cable to the cable trough.

From yet another aspect, the invention resides in a cable trough assembly for housing a cable comprising a cable trough and a cable anchor for anchoring the cable to the cable trough, the cable trough comprising an aperture for receiving the cable anchor.

From a further aspect, the invention resides in a method of securing a cable in a cable trough, the method comprising laying a cable in a channel of the cable trough and attaching the cable to a cable anchor installed in the cable trough. The method further comprises arranging a trough lid on the cable trough to close the channel and to conceal the cable anchor, installing the cable anchor such that a stop of the cable anchor is disposed outside the channel, the stop abutting an outer surface of the cable trough and the cable trough concealing the stop when in use.

Arranging a trough lid on the cable trough is a simple way of concealing the cable anchor. The trough lid also conceals the cable, and offers a degree of protection against unauthorised access to the cable and the cable anchor.

The method preferably comprises installing the cable anchor in the cable trough before laying the cable. The cable anchor may be installed by inserting the cable anchor into an aperture in the cable trough. Such an installation process is particularly advantageous because it is simple, and involves no specialist skills or tools.

Preferably, the method comprises installing the cable anchor such that a portion of the cable anchor is disposed outside the cable trough. In this case, the method may also comprise installing the cable anchor such that a portion of the cable anchor lies on the bottom surface of the cable trough.

In some embodiments of the method, the cable trough is laid after the cable anchor is installed. Installing the cable anchors first means that the cable anchors can be installed at any desired location, which may be away from the railway line, and the cable troughs can be easily laid in place at the required cable location with little additional time involved in laying the cable trough system.

In other embodiments, the method comprises laying the cable trough over the cable anchor to install the cable anchor. In this way, installing the cable anchor and laying the cable trough may occur simultaneously, as a single step.

Preferably, the method comprises laying the cable trough on track ballast of a railway.

In preferred embodiments, the method comprises laying the cable trough so that a portion of the cable anchor is disposed beneath the cable trough. In particularly preferred embodiments, a portion of the cable anchor is hidden beneath the cable trough. In this way, the cable anchor may be easily installed such that the cable trough shields at least a portion of the cable anchor from view.

The method may comprise attaching the cable to the cable anchor by tying the cable to the cable anchor. Preferably, the method comprises tying the cable to the cable anchor using a cable tie. This provides a quick and simple method of attaching the cable to the cable anchor that requires no specialist skills or tools.

The invention also extends to a method of installing a cable comprising laying a plurality of cable troughs in end-to-end abutment, and securing the cable in at least one of the cable troughs according to the method described above.

Preferably, the method comprises laying the cable in the plurality of cable troughs, and securing the cable to selected ones of the plurality of cable troughs. In this way, the cable need not necessarily be secured to every cable trough, reducing the time required for the installation.

Preferred and optional features of each aspect may be used, alone or in appropriate combination, in the other aspects also.

### Brief description of the drawings

Reference has already been made to Figure 1 of the accompanying drawings, which is a perspective view of a known cable trough. Preferred embodiments of the present invention will now be described with reference to the remaining drawings, in which:
Figure 2 is a perspective view of a cable trough assembly according to a first embodiment of the invention arranged for use in housing a cable;
Figure 3 is a perspective view of the cable trough of the cable trough assembly of Figures 2, in isolation;
Figure 4 is a perspective view of the cable anchor of the cable trough assembly of Figure 2, in isolation;
Figure 5 is a perspective view of the cable anchor of Figure 4 installed in the cable trough of Figure 3;
Figure 6 is a plan view of the cable trough assembly of Figure 5;
Figure 7 is a partial section of the cable trough assembly of Figure 6, on the plane Z-Z;
Figure 8 is a partial section of the cable trough assembly of Figure 6, on the plane X-X;
Figure 9 is a perspective view of another embodiment of a cable anchor, and Figure 10 is a perspective view of the cable anchor of Figure 9 installed in the cable trough of Figure 3;
Figure 11 is a perspective view of a further embodiment of a cable anchor, and Figure 12 is a perspective view of the cable anchor of Figure 11 installed in the cable trough of Figure 3; and
Figure 13 is a perspective view of an alternative embodiment of the cable trough system of Figure 5.

Terms such as 'horizontal', 'vertical', 'upper' and 'lower' refer to the orientation of the cable anchor as illustrated in the accompanying drawings. It will be appreciated, however, that the cable anchor need not be used in the orientation illustrated, but may be used in any suitable orientation.

### Detailed description of embodiments of the invention

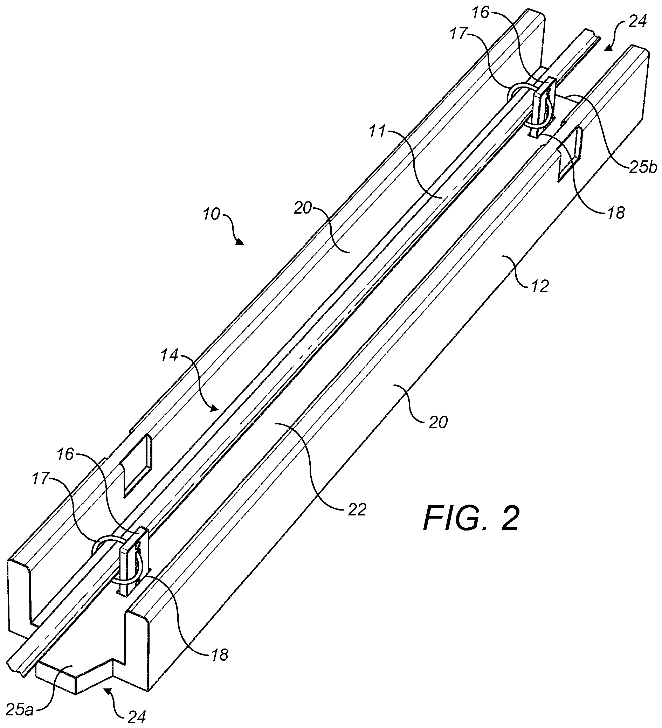

Figure 2 illustrates a cable trough assembly 10 according to the invention in use in housing a cable 11, such as a copper cable located alongside a railway line.

The cable trough assembly 10 comprises a pre-cast cable trough 12 that defines a channel 14 for receiving the cable 11. A base wall 22 of the cable trough 12 is provided with two apertures 18, and a cable anchor 16 extends through each aperture 18 into the channel 14, where the cable anchor 16 is attached to the cable 11 by a cable tie 17. In this way, the cable 11 is anchored by the cable anchor 16 such that movement of the cable 11 with respect to the cable trough 12 is limited.

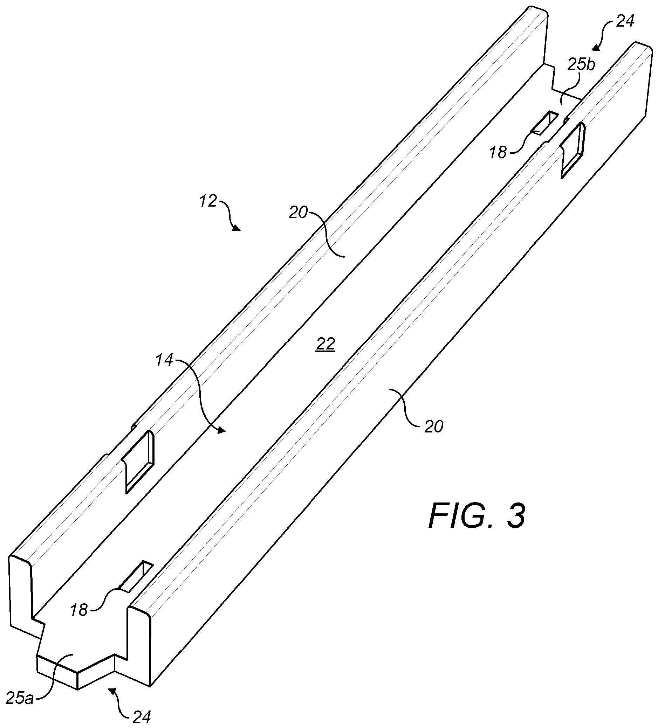

Considering firstly the cable trough 12 in isolation, with reference to Figure 3, the cable trough 12 comprises an elongate pre-cast unit that extends along a longitudinal axis L. The base wall 22 and a pair of upstanding side walls 20 define the channel 14, which is of 'U'-shaped cross-section in a plane orthogonal to the longitudinal axis L. The ends 24 of the cable trough 12 are open.

The two apertures 18 in the base wall 22 of the cable trough 12 are elongate rectangular slots arranged parallel to the longitudinal axis L. Each aperture 18 extends through the thickness of the base wall 22, and is positioned generally towards one of the ends 24 of the cable trough 12.

The cable trough 12 is pre-cast by wet casting or semi-dry casting from concrete. The apertures 18 are cast into the cable trough during its manufacture.

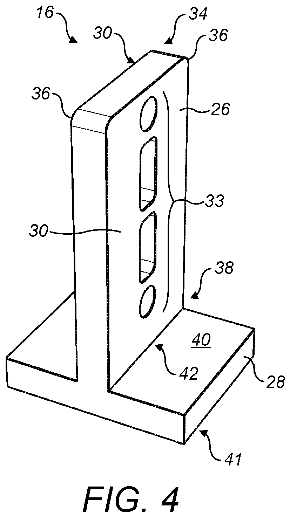

Turning now to the cable anchor 16, and referring in particular to Figure 4, the cable anchor 16 comprises a stop 28 in the form of a generally horizontal base or plate, and an attachment part 26 in the form of a generally upstanding fin or tongue to which the cable 11 can be attached. At a lower end 38 of the fin 26, the fin 26 is joined to the stop 28, such that the fin 26 projects upwardly and orthogonally from the stop 28. A shoulder 42 is defined between the stop 28 and the lower end 38 of the fin 26.

The fin 26 comprises a pair of opposed major surfaces 30, and a spacing between the major surfaces 30 defines a thickness of the fin 26. Openings 33 are formed in the fin and extend through the thickness of the fin 26 from one major surface 30 to the other. In use, the cable tie 17 can be threaded through one or more of the openings 33 to tie the cable to the fin. In this way, the openings 33 act as cable attachment features that facilitate attachment of the cable 11 to the fin 26 and guard against the cable 11 being detached from the fin 26 by pulling the cable tie upwardly over the fin 26.

The fin 26 and the stop 28 are integral with one another, such that the cable anchor 16 is formed from a single piece. The cable anchor 16 may be formed, for example, from a metal such as steel, a plastics material such as nylon, polypropylene, polystyrene, polyester or polyurethane, or a composite such as glass reinforced plastic (GRP), or a composite resin product. Preferably, the cable anchor 16 is formed from a material that is of relatively high strength and stiffness, to guard against failure or deformation of the cable anchor 16 under loads that can be applied by hand. The cable anchor 16 may be a cast component formed, for example, by injection moulding or casting, and may additionally or alternatively be machined.

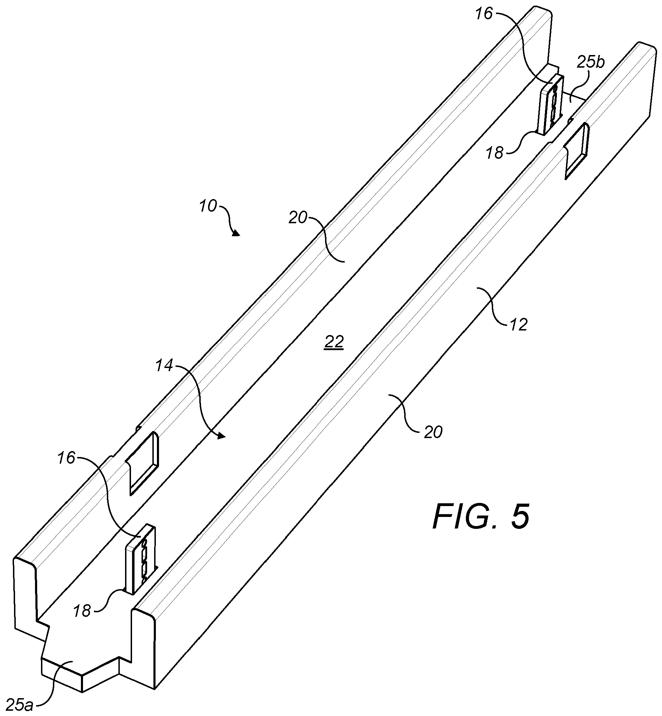

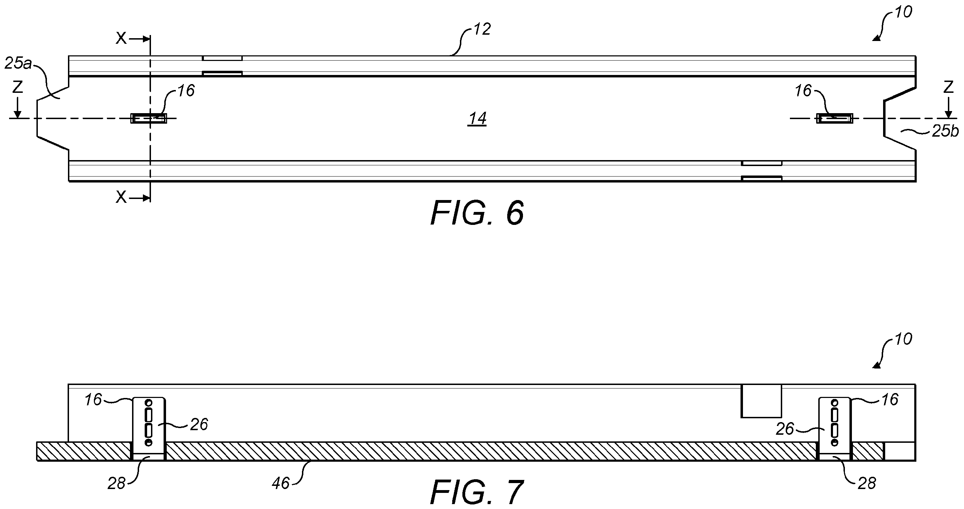

Referring now to Figures 5 to 8, the cable trough assembly 10 is assembled for use by installing two cable anchors 16 in the cable trough 12. To install the cable anchors 16 in the cable trough 12, each cable anchor 16 is inserted into one of the apertures 18, as shown in Figures 5 and 6.

Referring back to Figure 4, the fin 26 is shaped and dimensioned so as to be insertable into the aperture 18 of the cable trough 12 in an insertion direction relative to the cable trough 12 (in this case, a generally upward vertical direction). At an upper end 34 of the fin 26, the corners 36 of the fin 26 are rounded to guide the fin 26 into the aperture 18 during insertion.

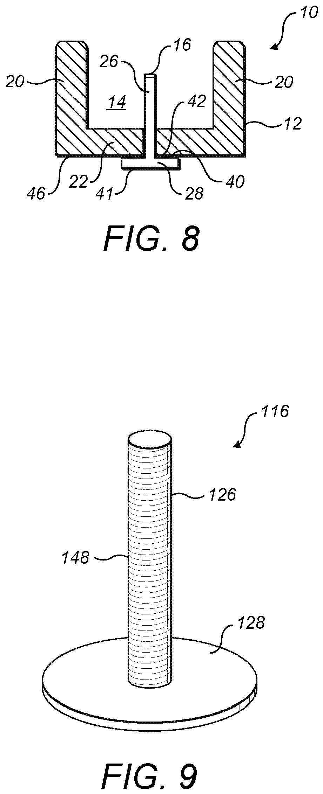

Referring still to Figure 4, the stop 28 comprises a plate that is shaped and dimensioned such that it cannot pass through the aperture 18 in the cable trough 12. The stop comprises upper and lower surfaces 40, 41 that are substantially horizontal. A spacing between the upper and lower surfaces 40, 41 defines a thickness of the stop. This thickness is relatively small, approximately 1 cm, such that the stop 28 is of low profile, and can be accommodated under the cable trough 12, as shown in Figure 8.

As best seen in Figures 7 and 8, each cable anchor 16 is arranged such that the stop 28 is located outside the cable trough 12, and the fin 26 extends through the aperture 18 into the channel 14.

For use, the cable trough 12 is arranged on track ballast (not shown) that provides the upper surface of the track bed. The lower surface 41 of the stop 28 is arranged in contact with the track ballast, and the upper surface 40 of the stop 28, and hence the shoulder 42 of the stop 28, is arranged to lie against a bottom surface 46 of the cable trough 12. This is particularly advantageous because the stop 28 is shielded from view by the cable trough 12, making the trough appear like a conventional trough when installed, and not betraying the location of the cable anchors 16.

As has been described, it is common for thieves to attempt to remove cables from cable troughs by severing a length of cable and pulling the severed length longitudinally in a 'cut-and-pull' method. The present invention guards against removal of the cable using this 'cut-and-pull' method by virtue of the fact that, in use, the cable 11 is anchored by the cable anchor 16.

If a thief attempts to remove the cable 11 from the cable trough assembly 10 by pulling the cable 11 in a longitudinal direction (i.e. generally parallel to the longitudinal axis L), a force is applied to the cable anchor 16 through the cable 11. In this event, withdrawal of the cable anchor 16 is guarded against because the stop 28 of the cable anchor 16 cannot pass through the aperture 18.

Instead, if the cable 11 is pulled longitudinally, the shoulder 42 of the stop 28 abuts the bottom surface 46 of the cable trough 12. In this way, the bottom surface 46 of the cable trough 12 acts as a locking surface, and abutment of the shoulder 42 against the locking surface 12 prevents the stop 28 passing through the aperture 18. Movement of the cable anchor 16 in the longitudinal direction is therefore guarded against. Because the cable 11 is attached to the cable anchor 16, movement of the cable 11 in the 16 in the longitudinal direction is similarly guarded against.

Thus, the cable anchor 16 acts to anchor the cable 11 to the cable trough 12, thereby guarding against removal of the cable 11 from the cable trough assembly 10 by pulling the cable 11 longitudinally.

To guard against breakage of the cable anchor 16, under loads that might feasibly be applied by a thief pulling on the cable 11, the structure and material of the cable anchor 16 may be selected to provide a required threshold strength. Since the cut-and-pull method involves the cable 11 being pulled in a direction that is substantially parallel to the cable 11, the cable anchor 16 is designed to have a particularly high strength parallel to the cable 11.
For example, the structure and material of the cable anchor 16 may be such that the failure load of the cable anchor 16 under a load applied parallel to the cable 11 is at least 800 Newtons, and is preferably at least 1000 Newtons.

The lower the point at which the cable 11 is fixed to the cable anchor 16, the lower the bending moment that is applied to the cable anchor 16 under a particular applied load. Thus, the openings 33 for fixing the cable 11 to the cable anchor 16 may be located substantially at the base of the fin 26, close to the stop 28, to reduce the moment applied to the cable anchor 16 when the cable is pulled, thereby increasing the failure load, and hence the strength, of the cable anchor 16.

The cable trough assembly also comprises a removable lid (not shown) arrangable on the cable trough 12 to cover the channel 14. The lid conceals the cable 11 and the cable anchor 16 from view. The lid may be a pre-cast concrete lid, or may be made from another suitable material such as steel.

In use, the cable trough assembly 10 is incorporated into a larger cable trough system that receives the cable 11. In such a cable trough system, a plurality of cable trough assemblies 10 are arranged end-to-end. The channels 14 of the cable troughs 12 are aligned and arranged in communication with each other to define a long channel that receives the cable 11. The cable 11 is anchored to the cable troughs 12 by cable anchors 16 installed in all or some of the cable troughs 12.

If a would-be thief were to sever the cable 11 housed in the cable trough system at two arbitrary points, the severed portion of cable 11 would be anchored by the cable anchors 16 as has been described. On pulling the severed cable portion longitudinally, the cable anchors 16 would limit movement of the cable 11, and the would-be-thief would be unsuccessful in the attempt to remove the severed portion of cable 11 from the cable trough system by the cut-and-pull method.

Thus the invention provides an inexpensive and simple means for hindering theft of cables 11 from a cable trough system.

To install a cable trough assembly 10 for use, the cable anchors 16 are first installed in the cable trough 12. The cable anchors 16 are aligned with and inserted into the apertures 18 in the base of the cable trough 12 in the insertion direction, such that the fins 26 extend into the channel 14, and the stops 28 are disposed outside the channel 14. The rounded corners 36 at the upper ends 34 of the fins 26 prevent the fins 26 catching on the exterior base surface 46 of the cable trough 12 around the aperture 18, thereby facilitating insertion of the fins 26 into the apertures 18.

Next, the cable trough system is assembled. The cable trough assembly 10, with the cable anchors 16 already installed, is placed on the track ballast at the desired location of the cable 11. Once placed on the ballast, the stops 28 of the cable anchors 16 are hidden beneath the cable trough 12. A plurality of cable troughs assemblies 10 are arranged end-to-end, and a continuous channel is formed for housing the cable 11.

To facilitate alignment of the cable trough assemblies 10 in the cable trough system, at the ends 24 of each cable trough 12, the base wall 22 is shaped to form complementary alignment features 25 in the form of a protrusion 25a at one end 24 of the cable trough 12, and a complementary recess 25b at the other end 24 of the cable trough 12. When assembling the cable trough system, the protrusion 25a of a first cable trough 12 is inserted into the recess 25b of a second cable trough 12 to align the cable trough assemblies 10.

Once the cable trough system is in place, the cable 11 is laid in the channel. The cable 11 is secured in the cable trough assembly 10 by tying the cable 11 to the cable anchors 16, using cable ties 17 that extend through the openings 33 in the fin 26.

Finally, the trough lids are arranged on the cable troughs 12 to close the channels 14 and conceal the cable anchors 16.

The present invention therefore provides a cable trough assembly 10 that can be easily installed. The installation process requires little additional work beyond that required to install known cable troughs. Furthermore, no special tools are required to install the cable trough assembly 10 and to secure the cable 11 in the cable trough 12 using the cable anchor 16.

There is also scope for retro-fitting a cable anchor 16 according to the present invention to existing cable trough systems, for example by drilling apertures 18 into existing cable troughs, inserting cable anchors 16 into the apertures 18 while the cable troughs are in place, and fixing the cables to the cable anchors 16.

Although cable anchors 16 may be provided in every cable trough 12 in a cable trough system, such that the cable 11 may be anchored to every cable trough 12, this need not necessarily be the case, and the beneficial effects of the present invention would still be evident even if only a proportion of the cable troughs 12 in the cable trough system were provided with cable anchors 16. The remainder of the cable troughs could be conventional cable troughs as shown in Figure 1, or could be cable troughs 12 as shown in Figure 3, but without cable anchors 16.

If only a proportion of the cable troughs 12 in the cable trough system are provided with cable anchors 16, there is still a high probability that a severed section of cable would be anchored to the cable trough system by a cable anchor 16. Thus, theft of cables 11 by the cut-and-pull method would still be hindered.

It will be appreciated that a greater number of cable anchors 16 will provide a greater degree of hindrance. If a severed section of cable is anchored by a larger number of anchors, the stress applied to each cable anchor 16 when the cable 11 is pulled is lower, thus the risk of breaking a cable anchor 16 is lower.

Accordingly, the proportion of cable troughs 12 in the system that are provided with a cable anchor 16 may be varied in different circumstances. For example, in areas where cable theft is particularly prevalent, for example near access points, such as stations or level crossings, every cable trough 12 may be provided with a cable anchor 16. In areas where cable theft is less prevalent, for example in areas that are less accessible, the proportion of cable troughs 12 provided with a cable anchor 16 may be relatively low, for example 5 %.

Alternative embodiments of the cable anchor 16 will now be described with reference to Figures 9 to 12, in which like reference numbers are used for like parts.

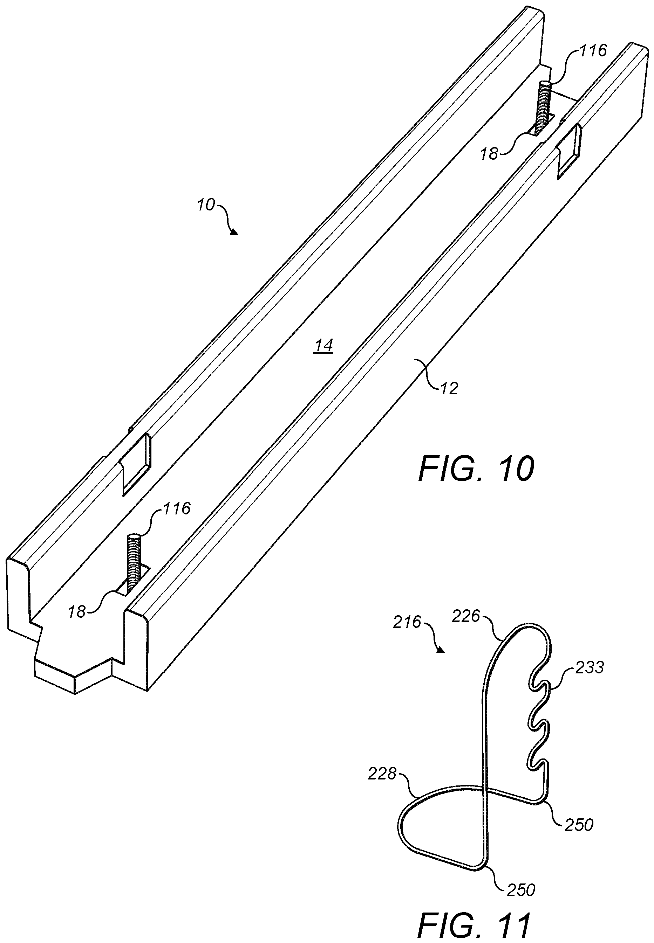

Referring to Figures 9 and 10, in a second embodiment of the cable anchor 116, the cable attachment part 126 is provided as a threaded rod. The rod 126 is of a substantially cylindrical configuration, and an outer surface 148 of the rod is provided with a screw thread formation that is machined onto the rod 126. In this embodiment, the screw thread provides a grip that guards against the cable tie 17 being pulled upwardly over the rod 126, and in this way acts as a cable attachment feature 133.

The rod 126 extends vertically upward from a circular plate that forms a base 128 of the cable anchor 116. The base 128 is of greater diameter than the rod 126, such that the base 128 acts as the stop, and cannot pass through the aperture 18 due to its size.

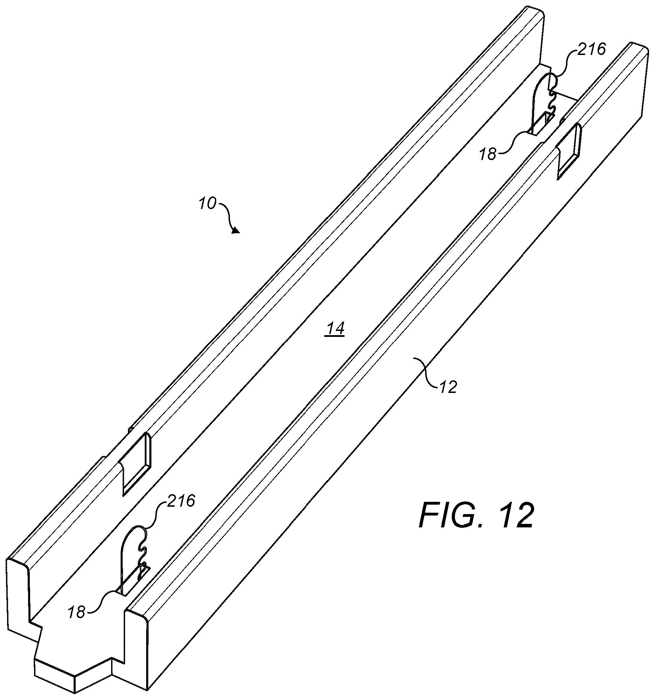

Referring to Figures 11 and 12, in a third embodiment, the cable anchor 216 is formed from a continuous elongate loop of wire, made from a material of relatively high stiffness, such as hard-drawn or cold-drawn mild steel, or a high-carbon steel, which may be coated with materials that serve as anti-rust protectors, and/or electrical insulators.. The loop comprises an angled bend 250 that defines first and second loop portions 226, 228 that lie orthogonal to one another.

The first portion 226 lies substantially vertically and defines the cable attachment part 226. In the cable attachment part 226, the wire is shaped to define alternating protrusions and recesses. The cable tie 17 may be fixed around a protrusion, such that the protrusion acts as a cable attachment feature 233.

The second portion 228 lies substantially horizontally and defines the stop 228. The stop 228 is of a size and shape that prevents the stop 228 from passing through the aperture 18. The relatively high stiffness of the material guards against the anchor 216 being deformed so as to pull the stop 228 through the aperture 18 if a force is applied to the cable anchor 228 through the cable 11.

Although in the embodiments described the cable attachment part 26 is integral with the stop 28 and the cable anchor 16 is formed of one piece, this need not be the case, and the cable attachment part and stop may instead be formed separately and joined together either at the point of manufacture, or during installation of the cable trough assembly.

The cable trough may be formed from any suitable material, for example a plastics material, or GRP. If formed from a plastics material or GRP, the cable trough may be formed by a moulding process such as injection moulding or hot pressing.

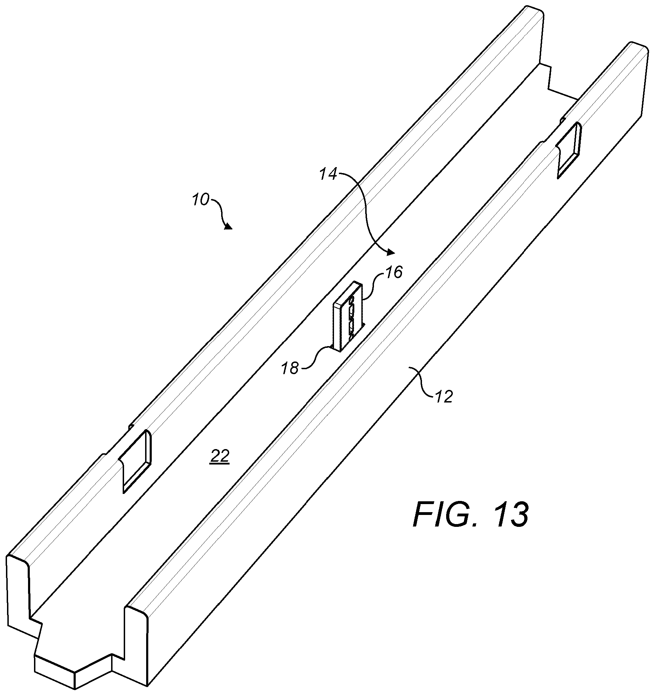

Any number of apertures may be present, at any suitable location. For example, a single aperture 18 may be provided in the centre of the base wall 22, to receive a single cable anchor 16, as illustrated in Figure 13. One or more apertures may additionally or alternatively be provided in side walls of the cable trough. The aperture may be of any suitable shape, and may be formed by any suitable machines, for example by casting or by machining.

Although in the preferred embodiments described above the cable anchor is anchored to the cable trough by means of an aperture, alternative means may be employed. For example, the cable anchor may be located over the end of the cable trough, at the join between neighbouring cable troughs.

It will be appreciated that many other variations of the cable trough assembly are envisaged that fall within the scope of the following claims.

## Claims

1. A lidded cable trough assembly (10) for housing a cable (11), comprising: a cable trough (12) comprising a channel (14) for receiving the cable (11); a cable anchor (16) for anchoring the cable (11) to the cable trough (12); and, a trough lid for closing the channel (14) and concealing the cable anchor (16), the cable anchor (16) comprising a stop (28, 128, 228) disposed outside the channel (14) such that the stop (28) is concealed by the cable trough (12) when in use, wherein the stop (28) is arranged to abut an outer surface of the cable trough (12) to guard against the cable anchor (16) being pulled out of the cable trough (12).

2. The cable trough assembly (10) of Claim 1, wherein the cable trough (12) comprises an aperture (18) for receiving the cable anchor (16).

3. The cable trough assembly (10) of Claim 1 or Claim 2, wherein the stop (28, 128, 228) is disposed on a bottom surface (46) of the cable trough (12).

4. The cable trough assembly (10) of any preceding claim, wherein the cable anchor (16) comprises an attachment part (26, 126, 226) that extends from the stop (28, 128, 228), the attachment part (26, 126, 226) extending into the channel (14).

5. The cable trough assembly (10) of Claim 4, wherein the attachment part (26, 126, 226) and the stop (28, 128, 228) are generally orthogonal.

6. The cable trough assembly (10) of Claim 4 or Claim 5, wherein the stop (28, 128, 228) comprises a plate and the attachment part (26, 126, 226) comprises a fin (26) that extends orthogonally from the plate.

7. The cable trough assembly (10) of any of Claims 4 to 6, wherein the attachment part (26, 126, 226) comprises attachment features (33, 133, 233), the attachment features (33, 133, 233) being openings, recesses or notches in or on the attachment part (26, 126, 226).

8. The cable trough assembly (10) of any of Claims 4 to 7, wherein the attachment part (26, 126, 226) and the stop (28, 128, 228) are integrally formed.

9. The cable trough assembly (10) of any of Claims 4 to 8, when dependent on Claim 2, wherein the aperture (18) is arranged to admit the attachment part (26, 126, 226) to the channel (14) and at least one dimension of the aperture (18) is smaller than a corresponding dimension of the stop (28, 128, 228).

10. The cable trough assembly (10) of Claim 9, wherein the aperture (18) extends through a base (22) of the cable trough (12).

11. The cable trough assembly (10) of any preceding claim, wherein the cable trough (12) is pre-cast, and the cable trough (12) is made of a cementitious material.

12. A method of securing a cable (11) in a cable trough (12), the method comprising:
laying a cable (11) in a channel (14) of the cable trough (12), attaching the cable (11) to a cable anchor (16) installed in the cable trough (12);
arranging a trough lid on the cable trough (12) to close the channel (14) and to conceal the cable anchor (16); and
installing the cable anchor (16) such that a stop (28, 128, 228) of the cable anchor (16) is disposed outside the channel (14), the stop (28, 128, 228) abutting an outer surface of the cable trough (12) and the cable trough (12) concealing the stop (28, 128, 228) when in use.

13. The method of Claim 12, comprising installing the cable anchor (16) in the cable trough (12) before laying the cable (11), wherein the cable trough (12) comprises an aperture (18), and wherein the method comprises inserting the cable anchor (16) into the aperture (18) to install the cable anchor (16).

14. The method of Claim 13, comprising:
laying the cable trough (12) after installing the cable anchor (16); or
laying the cable trough (12) over the cable anchor (16) to install the cable anchor (16),
so that a portion of the cable anchor (16) is disposed beneath the cable trough (12).

## Patentansprüche

1. Abgedeckte Kabelkanalanordnung (10) zur Aufnahme eines Kabels (11), welche aufweist: einen Kabelkanal (12), der eine Rinne (14) zur Aufnahme des Kabels (11) aufweist; eine Kabelverankerung (16) zum Verankern des Kabels (11) an dem Kabelkanal (12) und eine Kanalabdeckung zum Verschließen der Rinne (14) und Verdecken der Kabelverankerung (16), wobei die Kabelverankerung (16) einen Anschlag (28, 128, 228) aufweist, der außerhalb der Rinne (14) so angeordnet ist, dass der Anschlag (28) in Verwendung durch den Kabelkanal (12) verdeckt ist, wobei der Anschlag (28) dazu eingerichtet ist, an einer äußeren Oberfläche des Kabelkanals (12) anzuliegen, um zu verhindern, dass die Kabelverankerung (16) aus dem Kabelkanal (12) gezogen wird.

2. Kabelkanalanordnung (10) nach Anspruch 1, wobei der Kabelkanal (12) eine Öffnung (18) zur Aufnahme der Kabelverankerung (16) aufweist.

3. Kabelkanalanordnung (10) nach Anspruch 1 oder Anspruch 2, wobei der Anschlag (28, 128, 228) an einer unteren Oberfläche (46) des Kabelkanals (12) angeordnet ist.

4. Kabelkanalanordnung (10) nach einem der vorstehenden Ansprüche, wobei die Kabelverankerung (16) einen Befestigungsteil (26, 126, 226) aufweist, der sich von dem Anschlag (28, 128, 228) erstreckt, wobei der Befestigungsteil (26, 126, 226) sich in die Rinne (14) erstreckt.

5. Kabelkanalanordnung (10) nach Anspruch 4, wobei der Befestigungsteil (26, 126, 226) und der Anschlag (28, 128, 228) allgemein rechtwinklig sind.

6. Kabelkanalanordnung (10) nach Anspruch 4 oder Anspruch 5, wobei der Anschlag (28, 128, 228) eine Platte aufweist und der Befestigungsteil (26, 126, 226) einen Flügel (26) aufweist, der sich rechtwinklig von der Platte erstreckt.

7. Kabelkanalanordnung (10) nach einem der Ansprüche 4 bis 6, wobei der Befestigungsteil (26, 126, 226) Befestigungsmerkmale (33, 133, 233) aufweist, wobei die Befestigungsmerkmale (33, 133, 233) Durchlässe, Ausnehmungen oder Kerben in oder an dem Befestigungsteil (26, 126, 226) sind.

8. Kabelkanalanordnung (10) nach einem der Ansprüche 4 bis 7, wobei der Befestigungsteil (26, 126, 226) und der Anschlag (28, 128, 228) integral gebildet sind.

9. Kabelkanalanordnung (10) nach einem der Ansprüche 4 bis 8, bei Abhängigkeit von Anspruch 2, wobei die Öffnung (18) dazu eingerichtet ist, den Befestigungsteil (26, 126, 226) in die Rinne (14) zu lassen, und mindestens eine Abmessung der Öffnung (18) kleiner als eine entsprechende Abmessung des Anschlags (28, 128, 228) ist.

10. Kabelkanalanordnung (10) nach Anspruch 9, wobei die Öffnung (18) sich durch eine Basis (22) des Kabelkanals (12) erstreckt.

11. Kabelkanalanordnung (10) nach einem der vorstehenden Ansprüche, wobei der Kabelkanal (12) vorgegossen ist und der Kabelkanal (12) aus einem zementhaltigen Material hergestellt ist.

12. Verfahren zum Sichern eines Kabels (11) in einem Kabelkanal (12), wobei das Verfahren aufweist:
Verlegen eines Kabels (11) in einer Rinne (14) des Kabelkanals (12), Befestigen des Kabels (11) an einer in dem Kabelkanal (12) installierten Kabelverankerung (16);
Anordnen einer Kanalabdeckung auf dem Kabelkanal (12), um die Rinne (14) zu verschließen und um die Kabelverankerung (16) zu verdecken; und
Installieren der Kabelverankerung (16) in der Weise, dass ein Anschlag (28, 128, 228) der Kabelverankerung (16) außerhalb der Rinne (14) angeordnet ist, wobei der Anschlag (28, 128, 228) an einer äußeren Oberfläche des Kabelkanals (12) anliegt und der Kabelkanal (12) in Verwendung den Anschlag (28, 128, 228) verdeckt.

13. Verfahren nach Anspruch 12, das aufweist, die Kabelverankerung (16) in dem Kabelkanal (12) zu installieren, bevor das Kabel (11) verlegt wird, wobei der Kabelkanal (12) eine Öffnung (18) aufweist und wobei das Verfahren aufweist, die Kabelverankerung (16) in die Öffnung (18) einzuführen, um die Kabelverankerung (16) zu installieren.

14. Verfahren nach Anspruch 13, welches aufweist:
Verlegen des Kabelkanals (12) nach dem Installieren der Kabelverankerung (16) oder Verlegen des Kabelkanals (12) über der Kabelverankerung (16), um die Kabelverankerung (16) zu installieren,
so dass ein Abschnitt der Kabelverankerung (16) unter dem Kabelkanal (12) angeordnet ist.

## Revendications

1. Ensemble chemin de câbles (10) avec couvercle pour loger un câble (11), comprenant : un chemin de câbles (12) comprenant un canal (14) pour recevoir le câble (11) ; un ancrage de câble (16) pour ancrer le câble (11) au chemin de câbles (12) ; et un couvercle de chemin pour fermer le canal (14) et masquer l'ancrage de câble (16), l'ancrage de câble (16) comprenant une butée (28, 128, 228) disposée à l'extérieur du canal (14) de sorte que la butée (28) soit masquée par le chemin de câbles (12) lors d'une utilisation, dans lequel la butée (28) est agencée pour buter contre une surface externe du chemin de câbles (12) pour se prémunir contre le fait que l'ancrage de câble (16) soit tiré hors du chemin de câbles (12).

2. Ensemble chemin de câbles (10) selon la revendication 1, dans lequel le chemin de câbles (12) comprend une ouverture (18) pour recevoir l'ancrage de câble (16).

3. Ensemble chemin de câbles (10) selon la revendication 1 ou la revendication 2, dans lequel la butée (28, 128, 228) est disposée sur une surface inférieure (46) du chemin de câbles (12).

4. Ensemble chemin de câbles (10) selon une quelconque revendication précédente, dans lequel l'ancrage de câble (16) comprend une pièce de fixation (26, 126, 226) qui s'étend à partir de la butée (28, 128, 228), la pièce de fixation (26, 126, 226) s'étendant dans le canal (14).

5. Ensemble chemin de câbles (10) selon la revendication 4, dans lequel la pièce de fixation (26, 126, 226) et la butée (28, 128, 228) sont de manière générale orthogonales.

6. Ensemble chemin de câbles (10) selon la revendication 4 ou la revendication 5, dans lequel la butée (28, 128, 228) comprend une plaque et la pièce de fixation (26, 126, 226) comprend une ailette (26) qui s'étend de manière orthogonale à partir de la plaque.

7. Ensemble chemin de câbles (10) selon l'une quelconque des revendications 4 à 6, dans lequel la pièce de fixation (26, 126, 226) comprend des caractéristiques de fixation (33, 133, 233), les caractéristiques de fixation (33, 133, 233) étant des ouvertures, des évidements ou des encoches dans ou sur la pièce de fixation (26, 126, 226).

8. Ensemble chemin de câbles (10) selon l'une quelconque des revendications 4 à 7, dans lequel la pièce de fixation (26, 126, 226) et la butée (28, 128, 228) sont formées d'un seul tenant.

9. Ensemble chemin de câbles (10) selon l'une quelconque des revendications 4 à 8, lorsqu'elles dépendent de la revendication 2, dans lequel l'ouverture (18) est agencée pour admettre la pièce de fixation (26, 126, 226) vers le canal (14) et au moins une dimension de l'ouverture (18) est plus petite qu'une dimension correspondante de la butée (28, 128, 228).

10. Ensemble chemin de câbles (10) selon la revendication 9, dans lequel l'ouverture (18) s'étend à travers une base (22) du chemin de câbles (12).

11. Ensemble chemin de câbles (10) selon une quelconque revendication précédente, dans lequel le chemin de câbles (12) est prémoulé, et le chemin de câbles (12) est fait d'un matériau cimentaire.

12. Procédé de protection d'un câble (11) dans un chemin de câbles (12), le procédé comprenant :
la pose d'un câble (11) dans un canal (14) du chemin de câbles (12), la fixation du câble (11) à un ancrage de câble (16) installé dans le chemin de câbles (12) ;
l'agencement d'un couvercle de chemin sur le chemin de câbles (12) pour fermer le canal (14) et pour masquer l'ancrage de câble (16) ; et
l'installation de l'ancrage de câble (16) de sorte qu'une butée (28, 128, 228) de l'ancrage de câble (16) soit disposée à l'extérieur du canal (14), la butée (28, 128, 228) butant contre une surface externe du chemin de câbles (12) et le chemin de câbles (12) masquant la butée (28, 128, 228) lors d'une utilisation.

13. Procédé selon la revendication 12, comprenant l'installation de l'ancrage de câble (16) dans le chemin de câbles (12) avant la pose du câble (11), dans lequel le chemin de câbles (12) comprend une ouverture (18), et dans lequel le procédé comprend l'insertion de l'ancrage de câble (16) dans l'ouverture (18) pour installer l'ancrage de câble (16).

14. Procédé selon la revendication 13, comprenant :
la pose du chemin de câbles (12) après l'installation de l'ancrage de câble (16) ; ou
la pose du chemin de câbles (12) par-dessus l'ancrage de câble (16) pour installer l'ancrage de câble (16),
de sorte qu'une partie de l'ancrage de câble (16) soit disposée en dessous du chemin de câbles (12).
